Europäisches Patentamt

European Patent Office

Office européen des brevets

(11) Publication number: **0 509 417 A1**

# EUROPEAN PATENT APPLICATION

(21) Application number: **92106259.2**

(22) Date of filing: **10.04.92**

(51) Int. Cl.5: **G01P 15/10**

(30) Priority: **19.04.91 JP 26838/91 U**

(43) Date of publication of application:
**21.10.92 Bulletin 92/43**

(84) Designated Contracting States:
**DE FR GB**

(71) Applicant: **JAPAN AVIATION ELECTRONICS INDUSTRY, LIMITED**
**21-6, Dogenzaka 1-chome**
**Shibuya-ku Tokyo(JP)**

(72) Inventor: **Yabe, Hisashi, c/o Japan Aviation Electronics**
**Industry Limited, 21-6, Dogenzaka 1-chome**
**Shibuya-ku, Tokyo(JP)**
Inventor: **Ando, Yoshiyuki,c/o Japan Aviation Electronics**
**Industry Limited, 21-6, Dogenzaka 1-chome**
**Shibuya-ku, Tokyo(JP)**

(74) Representative: **Blumbach Weser Bergen Kramer Zwirner Hoffmann Patentanwälte**
**Radeckestrasse 43**
**W-8000 München 60(DE)**

(54) Oscillating type accelerometer.

(57) A pendulum (12) is mounted on the inside wall of a rectangular frame-like stationary member (11) in a cantilever fashion. The pendulum has in its free end portion a rectangular cut (21), inside of which a cantilever type oscillator mount (22) is formed integrally with the pendulum. Between the free end of the oscillator mount and the stationary member there is fixed mounted an oscillator (15) at right angles to the pendulum. When an excessive acceleration is applied to the stationary member, the oscillator mount is bent with its thin hinge (13) and the pendulum strikes against a stopper (17), preventing that a stress is imposed in the oscillator in excess of its permissible tensile strength.

FIG. 2

## BACKGROUND OF THE INVENTION

The present invention relates to an oscillating type accelerometer which has a construction in which an oscillator is coupled to a pendulum fixed to a stationary part in a cantilever fashion and the stationary part so that when acceleration is applied to the stationary part, the oscillator stretches or contracts according to the direction of the acceleration and the resulting change in the natural oscillation frequency of the oscillator is used to detect the acceleration.

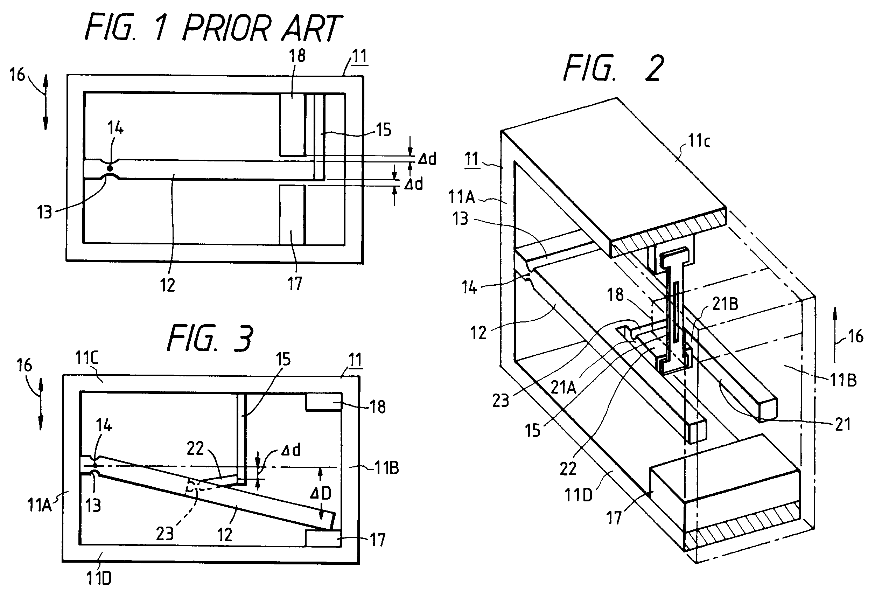

Fig. 1 shows a conventional oscillating type accelerometer. A pendulum 12 is disposed in a frame-like stationary member 11 and is fixed at one end to the inner wall surface of the rectangular frame-like stationary member 11 in a cantilever fashion. The pendulum 12 has a thin hinge 13 near its fixed end so that the pendulum 12 is capable of rotational or angular displacement in the frame of the stationary member 11. The axis 14 of the thin hinge 13 is perpendicular to the plane of the frame of the stationary member 11 (which is parallel to the plane of the paper), and hence is at right angles to the longitudinal direction of the pendulum 12. The free end of the pendulum 12 has fixed thereto one end of an oscillator 15 extending substantially at right angles thereto, the other end of the oscillator 15 being fixed to a top panel of the stationary member 11.

The oscillator 15 is, for example, a quartz oscillator, which is excited at its natural oscillation frequency when the accelerometer is in use, though not shown. When an acceleration 16 is applied to the stationary member 11 in a direction perpendicular to both of the axis 14 and the longitudinal direction of the pendulum 12, the pendulum 12 turns about the axis 14 in such a manner that its free end is displaced by inertia relative to the stationary member 11 in a direction opposite to that of the acceleration 16. In consequence, a tensile stress or compressive stress is produced in the oscillator 15 correspondingly, causing a change its natural oscillation frequency. The direction and magnitude of the input acceleration are detected on the basis of the direction and amount of change in the natural oscillation frequency of the oscillator 15.

When an excessive acceleration is exerted on the stationary member 11, an excessive stress is produced in the oscillator 15, and if the stress exceeds its permissible tensile strength or compressive strength, the oscillator 15 will be broken down. To prevent this, it is customary in the prior art that stoppers 17 and 18 for limiting the rotational movement of the pendulum 12 in excess of a predetermined value are mounted on the inside of the frame-like stationary member 11 at both sides of the pendulum 12 in the plane of its rotational movement. That is, when an excessive acceleration is applied to the stationary member 11, the free end portion of the pendulum 12 strikes against the stopper 17 or 18 and stops there, and hence no larger stress will be imposed on the oscillator 15. A maximum displacement of the free end of the pendulum 12 and a maximum stress that is imposed on the oscillator 15 are dependent on the amount of spacing between the stopper 17 or 18 and the pendulum 12. The gaps between the stoppers 17, 18 and the pendulum 12 are chosen such that the maximum stress is smaller than the permissible tensile or compressive strength of the oscillator 15.

As mentioned above, the conventional oscillating type accelerometer employs the stoppers 17 and 18 for preventing an excessive stress from being exerted on the oscillator 15, but since the amount of maximum permissible stretch or compression of the oscillator 15 is, for example, as small as 1 $\mu$m or less, the gap $\Delta d$ between the pendulum 12 and each of the stoppers 17 and 18 must be 1 $\mu$m or less in its instance. It is very difficult, however, to accurately provide such a minute gap $\Delta d$.

## SUMMARY OF THE INVENTION

It is therefore an object of the present invention to provide an oscillating type accelerometer in which the stress that is produced in the oscillator can easily be set within its permissible tensile strength or compressive strength.

According to the present invention, the pendulum has an oscillator amount formed integrally therewith in a cantilever fashion, the free end portion of the oscillator mount has fixed thereto one end of the oscillator and the coupling portion between the oscillator mount and the pendulum has a structure which permits rotational displacement of the oscillator mount when an acceleration is applied to the stationary member in a direction perpendicular to both of the direction of extension of the pendulum and its axis of rotational movement.

## BRIEF DESCRIPTION OF THE DRAWINGS

Fig. 1 is a side view of a conventional accelerometer;

Fig. 2 is a perspective view, partly cut away, illustrating an embodiment of the present invention; and

Fig. 3 is a side view showing the state in which the pendulum strikes against a stopper in the accelerometer depicted in Fig. 2.

## DESCRIPTION OF THE PREFERRED EMBODIMENT

Fig. 2 schematically illustrates an embodiment of the present invention, in which the parts corresponding to those in Fig. 1 are identified by the same reference numerals. In this embodiment the stationary member 11 is a rectangular frame-like member composed of side panels 11A, 11B, a top panel 11C and a bottom panel 11D and the plate-like pendulum 12 has its one end fixed to the inner wall surface of the side panel 11A as in the prior art example shown in Fig. 1. In Fig. 2, however, a part of the top panel 11C and the side panel 11B are indicated by the imaginary lines. The pendulum 12 has near its fixed end the thin hinge 13 which extends in parallel to the side panel 11A, and hence is capable of rotary motion. The pendulum 12 extends to the vicinity of the side panel 11B of the stationary member 11 and has a rectangular cut 21 which extends from the free end portion of the pendulum 12 to its intermediate portion and grooves 21A and 21B which are contiguous to opposed inside faces of the cut 21, defining therebetween an oscillator mount 22 coupled at one end to the pendulum 12. In other words, the oscillator mount 22 is a cantilever which has its one end near the axis 14 coupled to the pendulum 12. The oscillator 15 is fixed at one end to the free end of the oscillator mount 22, extends at right angles to the pendulum 12 and is fixed at the other end to the top panel 11C of the stationary member 11. In the coupling portion between the oscillator mount 22 and the pendulum 12 there is formed a thin hinge 23, by which the oscillator mount 22 is allowed to conduct rotational displacement relative to the pendulum 12 when an acceleration is applied to the stationary member 11 at right angles to the surface of the pendulum 12. The pendulum 12 and the oscillator mount 22 can be formed as a unitary structure by chemically etching a sheet of fused quartz, for example. The stoppers 17 and 18 are fixedly mounted on the inside of the stationary member 11 above and below the free end portion of the pendulum 12.

With the structure shown in Fig. 2, for instance, when the acceleration 16 is applied to the stationary member 11 from below at right angles to the surface of the pendulum 12, the pendulum 12 is angularly displaced about the axis 14 toward the stopper 17 and the oscillator mount 22 is influenced by the angular displacement of the pendulum 12, producing a tensile stress in the oscillator 15. As a result, the natural oscillation frequency of the oscillator 15 decreases. As is the case with the prior art, the magnitude and direction of the acceleration can be detected by detecting the natural oscillation frequency of the oscillator 15.

When the acceleration 16 is excessive, the pendulum 16 conducts great angular displacement. Since the oscillator mount 22 is coupled to the oscillator 15, the oscillator mount 22 turns about the thin hinge 23 in a direction opposite from the stopper 17 with respect to the pendulum 12 and the free end of the pendulum 12 strikes against the stopper 17. Accordingly, the maximum displacement $\Delta d$ of the free end of the oscillator mount 22 is appreciably smaller than the maximum displacement $\Delta D$ of the free end of the pendulum 12. Thus, there is no fear of an excessive tensile stress being produced in the oscillator 15.

The maximum displacement $\Delta d$ of the free end of the oscillator mount 22 is selected smaller than a value corresponding to the maximum permissible tensile strength of the oscillator 15, and consequently, the maximum displacement $\Delta d$ is selected as small as 1 $\mu$m or so, where the maximum displacement $\Delta D$ of the free end of the pendulum 12, i.e. the gap $\Delta D$ between the pendulum 12 and the stopper 17 can be selected sufficiently larger than the maximum displacement $\Delta d$ -- this allows ease in setting the value $\Delta D$ for obtaining the limit value $\Delta d$ desired to obtain. That is, the limitation on the accuracy for the displacement $\Delta D$ is raised by $\Delta D / \Delta d$ as compared with the accuracy for the displacement $\Delta d$.

While in the above the oscillator 15 has been described to be protected against an excessive tensile stress, it can similarly be protected against an excessive compressive stress with ease. The position of coupling the oscillator mount 22 to the pendulum 12 and the direction of the axis of rotation with respect to the pendulum 12 can be selected at will so that the oscillator mount 22 can turn about the thin hinge 23 with respect to the pendulum 12 to prevent an excessive tensile or compressive stress from being imposed on the oscillator 15. It is also possible to adopt a construction in which another oscillator is fixed at one end to the free end of the oscillator mount 22 and the stationary member 11 on the side opposite from the oscillator 15 and their natural oscillation frequencies are changed by acceleration in opposite directions, then the difference is detected between the both natural oscillation frequencies.

As described above, according to the present invention, a cantilever type oscillator mount is formed as a part of the pendulum and the oscillator is fixed at one end to the oscillator mount so that when an excessive acceleration is applied to the stationary member, the oscillator mount turns with respect to the pendulum, preventing an excessive stress from being imposed on the oscillator. Since the maximum displacement of the pendulum can be selected appreciably larger than the maximum displacement of the oscillator mount, it is necessary only to adjust the spacing between the pendulum and each stopper so that the displacement of the free end of the pendulum does not exceed its maximum permissible displacement. Hence, the accelerometer of the present invention can easily be fabricated.

It will be apparent that many modifications and variations may be effected without departing from the scope of the novel concepts of the present invention.

**Claims**

1. An oscillating type accelerometer in which a pendulum is supported by stationary means in a cantilever fashion in a manner to be turnable about an axis of rotation with respect to said stationary means, an oscillator extending at right angles to both of the longitudinal direction of said pendulum and said axis of rotation is provided between said pendulum and said stationary means, and stopper means is fixedly mounted on said stationary means to prevent said pendulum from rotational movement in excess of a predetermined value, characterized in that an oscillator mount is provided as a part of said pendulum in a cantilever fashion and said oscillator is fixed to the free end portion of said oscillator mount, whereby said oscillator mount is turnable with respect to said pendulum when an acceleration is applied to said stationary means at right angles to both of the longitudinal direction of said pendulum and said axis of rotation.

2. The accelerometer of claim 1 wherein said pendulum is a slender plate-like member and has a cut extending from the free end to the intermediate portion thereof lengthwise thereof and said oscillator mount extends from the innermost end of said cut toward said free end of said pendulum.

# FIG. 1 PRIOR ART

# FIG. 2

# FIG. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 221 131 (W.C.ALBERT)<br>* column 2, line 55 - column 3, line 39; figures 2-5 *<br>--- | 1,2 | G01P15/10 |
| A | GB-A-2 133 152 (SUNDSTRAND DATA CONTROL)<br>* page 1, line 116 - page 2, line 22; figures 1-3 *<br>--- | 1 | |
| A | US-A-4 751 849 (PAROS ET AL)<br>* column 11, line 15 - line 41; figure 24 *<br>----- | 1 | |
| | | | **TECHNICAL FIELDS SEARCHED (Int. Cl.5)**<br><br>G01P |

The present search report has been drawn up for all claims

| Place of search | Date of completion of the search | Examiner |
|---|---|---|
| THE HAGUE | 16 JULY 1992 | HANSEN P. |